# EUROPEAN PATENT APPLICATION

(11) **EP 2 083 531 A2**
(43) Date of publication of application: **29.07.2009**
(21) Application number: 09425005.7
(22) Date of filing: 14.01.2009
(51) Int. Cl.: H04L 9/32

(54) **Location- and time-stamping device, particularly for digital documents**

(30) Priority: 23.01.2008 IT RM20080034
(71) Applicant: De Luca, Stefano, 00045 Genzano (IT); Trifiletti, Alessandro, 00049 Velletri (RM) (IT)
(72) Inventor: Trifiletti, Alessandro, 00049 Velletri (Roma) (IT)
(74) Representative: Santi, Filippo

(57) **Abstract**

The invention relates to a location- and time-stamping device (10), in particular of digital documents, comprising an internal clock (11), a location and local time certification unit and a secure cryptographic machine (13), all connected to a data processor (15); the invention further relates to a process for location- and time-stamping making use of said device (10).

## Description

The present invention concerns a location- and time-stamping device, particularly for digital documents.

The invention refers to the field of digital information communication, in particular to methods and systems suitable for certifying the location and the time when such digital information was originated or were made available. More in particular, the device of the invention allows to certify the use of an object, typically a document, in a limited sphere, that is to say to guarantee the presence of an object, person or event in a specific location in a specific time.

At present, it is common practice the use of devices allowing for the encryption of a text so that it is available only for the recipient of the communication and allowing for signing a document, affixing a digital mark proving that only the person who signed could perform that operation.

These devices are based on public key cryptography operations, in particular on the algorithm known with the acronym RSA (R. L. Rivest, A. Shamir, L. Adleman, A Method of Obtaining Digital Signatures and Public Key Cryptosystems, Communications of the ACM, Vol. 21, N. 2, pages. 120 - 126, Feb 1978). With this particular form of cryptography, asymmetrical, two keys are used, one of which is defined private while the other is defined public. The two part that have to exchange a document will keep secret their private key, while the public key will be disclosed and made as more public as possible. In order to encrypt a document that has to be sent from a user A to a user B, the user A will use the public key of the user B. The user B will use its private key to perform the opposite operation of decryption; it will be possible only for the user B to decrypt the encrypted document, operation that would be impossible also for the user A. In fact, the private key can in no way be mathematically derived starting from the public key, at least not in reasonable time.

A similar operation will be used for the affixing of the electronic signature, according to which the user A wants to guarantee to be the author of the document. In this case, the user A will use its private key to compose the encrypted text, while the user B will use the public key of the user A to decrypt its content.

Since the encryption obtained on the base of asymmetrical algorithms is typically a very slow operation, the operation of signing is affixed typically to a cryptographic quantity expressing in brief all the document, called "document fingerprint" or "digest", generated by a hashing algorithm, such as the algorithms MD5 or SHA-1.

In order to improve the diffusion of the public key, suitable electronic certificates are used, issued by an authority of certification commonly named with the English term Certification Authority. The electronic certificates contain all the data relating to the user, its public key and the terms of validity of the keys, all these data being signed through the private key of the Certification Authority. Therefore it will be possible to verify the authenticity of the certificate using the public key of the Certification Authority, assumed to be known (or at least more known and verifiable than the user that certified its public key through such Certification Authority). The certification process can be reiterated different times, thus obtaining certificates containing the information and the public key of the user, the data of the Certification Authority and its signature, the data and the signature of a further Certification Authority certifying the data of the first Certification Authority and so on. A certificate can also contain a private key, and is prepared for the exclusive use of the user. It can contain also the certificate of the certifier and in this case it is possible to speak of certification chain. The certificates are defined through a standard acknowledged and identified as standard X.509.

The certificate containing the private key can be stored, for higher safety, in a secure cryptographic machine or, with an English term, secure cryptographic processor such as a smartcard. These machines have the characteristic of being anti-tamper), i.e. to be realised, for example, in such a way that possible physical attempt of anauthorised access to their content result in the destruction of the content itself (i.e., in this case, in the destruction of the private key and in case of the certificate).

Through this mechanism, it is possible to communicate the encrypted document (also called cripto-text) also through unsafe channels, such as the Internet web or a radio transmission, without the risk that the content can be decrypted by others.

Starting from the technique of public key encryption, it was subsequently created a system allowing for affixing time stamps on the data. The aim of these stamps is the guarantee that a specific document, or a specific series of data, exist from at least a specific time that can univocally determined.

According to the prior art, the process through which the affixing of the time stamp takes place provides for the steps specified in the following. The user prepares a document by affixing on it its digital signature. The same user also prepares a time stamp request, that is a codified request containing at least the signature of the document (and therefore guaranteeing for its integrity); the format will preferably be similar to that defined according to the standard IETF RFC 3161. The document, its signature and the request for time stamping are therefore sent to a suitable certifying authority, named with the English term Time Stamping Authority, typically corresponding with the abovementioned Certification Authority, in a position to verify the authenticity and integrity of the document (that is that the signature of the document corresponds to the document itself, and therefore that the document was not modified during the transmission and that the certificate, and therefore the used keys are not expired or invalid. In response, the Time Stamping Authority inserts the exact time of reply, obtained by a reliable source (for example a reference clock such as for example the Swiss atomic clock, the clock of Osservatorio Galileo Ferraris in Turin or the time provided by the satellites of the Global Positioning System, GPS).

Since time is integrated into the reply, and this is signed by the Time Stamping Authority, to be considered reliable by definition, a certification is obtained as a guarantee of the fact that the document exists at least starting from the moment in which the response of the Time Stamping Authority is completed. Due to the delayed nature of the method of affixing time stamps according to the prior art, obviously it will not be possible to guarantee the existence of the document since its effective creation until the moment of the response of the Time Stamping Authority. Further, since the request for a time stamp typically occurs through an Internet connection, the user is obliged to have a connection to the web in order to obtain its time stamp.

To complete the description, it must be further taken into consideration that one of the possible formats of the time stamps and the data exchange protocol with the Time Stamping Authority are those according to the technical specifications set forth in document RFC 3161 *"Internet X.509 Public Key Infrastructure Time Stamp Protocol (TSP)",* PKIX Working Group IETF, August 2001. These specifications meet the requirements of the Italian law concerning the features considered as essential by the legislator with regard to the service of time stamping.

US patent N. US5659617 discloses a space certification system, i.e. a system allowing for certifying that an object or an event are located in a specific area. According to the patent, the position of the object is determined using radio signals and the safe transmission of the determined position is obtained using encryption techniques. The same patent provides for the possibility that in the location certificate is also inserted a time datum, derived from an internal clock of the device. Even if it is possible to protect such a clock from possible tampering, for example by making it anti-tamper, nevertheless, the time determination is not sufficiently guaranteed. Further, also the determination of the position by means of radio signals can undergo attacks from the exterior, for example data simulation (spoofing), through radio signals containing misleading information.

After all, the only procedures, according to the prior art, assuring a sufficient reliability, are those making use of certifications verified by external authorities.

However, even if these procedures allow for providing a certified stamping, they are bound to the need of using a connection, typically through the web, with a Time Stamping Authority, with the risk that the reply, and therefore the affixing of the time stamp, is generated only in a moment much later than that needed by the user.

O conclude, it does not exist any system of time nor location- and time-stamping in a position to absolutely guarantee the users with respect to the location and time accuracy of the certification and at the same time with respect to its reliability.

Therefore it would be desirable to have a system and therefore a device for affixing time stamps allowing for preventing any time delay in the period between the time of the request for the stamp and the time as certified by the Time Stamping Authority, independently from the reply of the Time Stamping Authority, also assuring the same authoritativeness of the validity of the time stamp and at the same time being in a position to provide for an equally reliable certification regarding the position of the signing authority at the time of the creation of the stamp.

In this context takes its place the solution according to the present invention with the aim of providing for a device of location- and time-certification of documents, in particular digital documents, wherein the affixing of the location- and time-stamp is obtained at the same time of the request and its certification by a Time Stamping Authority is deferred, also maintaining the original value of the location- and time-stamp.

The present invention further aims to guarantee the location- and time-stamp affixed on a document, and in particular the data concerning time and location cannot be modified by the user or by any third person before the certification by the Time Stamping Authority.

These and other results are obtained according to the present invention proposing a location- and time-stamping device, particularly for digital documents, provided with a subsystem for the determination of the position, in particular based on the reception of GPS signals (or a similar positioning system) and an internal clock for the determination of the exact time of the request for location- and time-stamping, interacting with means for affixing the location- and time-stamp and further with means for data generation (data also comprising time derived from GPS) allowing for the verification of the validity of the location- and time-stamp by a Time Stamping Authority.

It is therefore a first specific object of the present invention a location- and time-stamping device, particularly for digital documents, comprising an internal clock, a location and local time certification unit and a secure cryptographic machine, all connected with a data processor.

The location- and time-stamping device, particularly for digital documents is realised using techniques and technologies suitable for preventing attacks and manipulations from the exterior, therefore it will be anti-tamper and anti-probe, and to conclude it is possible to say that it results to be a secure machine.

The location and local time certification unit has the purpose of guaranteeing the exact position and time of the system and their integrity during the transfer to the Time Stamping Authority, without any possibility of alterations (as a consequence of attacks).

According to the present invention, said location and local time certification unit can be realised in different ways, all interacting with the internal clock and comprising a subsystem for the determination of the position, alternately in combination with one of the following solutions: (1) through a generator of pseudorandomic numbers dependent on a seed which is present in the unit or, as an alternative, (2) by encoding with a symmetrical key contained in the unit the time coming from the internal clock or, as a further alternative, (3) the same time encoded with an asymmetrical key (with the Time Stamping Authority as recipient) and signed with its own private key, contained in the location and local time certification unit.

According to the invention, said location- and time-stamping device, particularly for digital documents comprise further input/output devices and preferably a web connection card or a modem.

Further, always according to the invention, said location- and time-stamping device, particularly for digital documents can be contained, as a whole or at least as far as its sensitive components is concerned, inside an anti-tamper and anti-probe container.

Always according to the invention, said secure cryptographic machine is provided with a private key, stored on an anti-tamper and anti-probe portion of memory, with an electronic certificate relating to the electronic key, stored on an anti-tamper and anti-probe portion of memory, and with a cryptographic processor for cryptographic operations.

Further, according to the invention, said subsystem for the determination of the position comprise an apparatus for the determination of the position through GPS, Galileo or other positioning system.

It is further a second specific object of the present invention a process for location- and time-stamping comprising the following steps:
- presenting a request for location- and time-stamping by a user,
- obtaining by a data processor the protected position, date and current time generated by a location and local time certification unit,
- generating, by the data processor, the data of the request for location- and time-certificate, comprising the position, date and time generated by the location and local time certification unit together with the request for time stamp,
- obtaining, by the data processor, the fingerprint of the request for location- and time-stamp, and affixing of the electronic signature on said fingerprint, generated by a cryptographic machine, and in case encoding the request for location- and time-stamp on the base of a public key provided by the user as a part of the received user request,
- storing or sending to third parties of the request for a location-and time- certificate.

Preferably, according to the invention, said process for location-and time-stamping further comprises the following steps:
- sending said request for location- and time- certificate to a Time Stamping Authority,
- verifying, by the Time Stamping Authority, the congruence of the position, date and time generated by said location and local time certification unit, and, in case of positive result,
- generating, by said Time Stamping Authority, of a location- and time-stamp, containing the same data previously put in the request for location- and time- certificate and certification time as it is known by the Time Stamping Authority.

The usefulness of the device and the process according to the present invention is evident, allowing for certifying, amongst the other, the position of a person at a specific time. Some example of use of the system of location- and time-stamping according to the present invention are:
- for the police or the personnel of first intervention services: to prove the time they arrived on the site, and when their intervention was concluded;
- for the policemen: to ascertain their effective presence on the site of an housebreaking;
- for the personnel of a maintenance company: to testimony they effectively reach the agreed site in order to execute repairing or interventions;
- for the personnel of a transportation company: to give evidences of the fact that they delivered an object in an established site, i.e. that the delivery was attempted but did not succeed due to the absence of the recipient;
- for the personnel of refuse disposal service company: to certify the conveyance to a dump;
- for people offering travel services: to certify the departure or arrival of planes, trains and in general all the transport means that can be the object of a claim;
- for the joined signature of documents: in cases where it is necessary that all the signing persons are in the same location;
- for the restricted authentication in some physical places: in that case it will be possible to guarantee that the authentication takes place in the prescribed places, for example a user can access an informatic system only when he is inside the premises of the company he works for, not when he is outside;
- for verifying the use an object: in order to guarantee that the object can be used only when it is in a specific location, for example inside the premises of a research center.

The present invention will be described, for illustrative, non-limitative purposes, according to its preferred embodiments, with particular reference to the figures of the enclosed drawings, wherein:
- figure 1 shows a block diagram of a location- and time-stamping device, particularly for digital documents according to the present invention, and
- figure 2 shows a data flowchart of the process for location- and time-stamping according to the present invention.

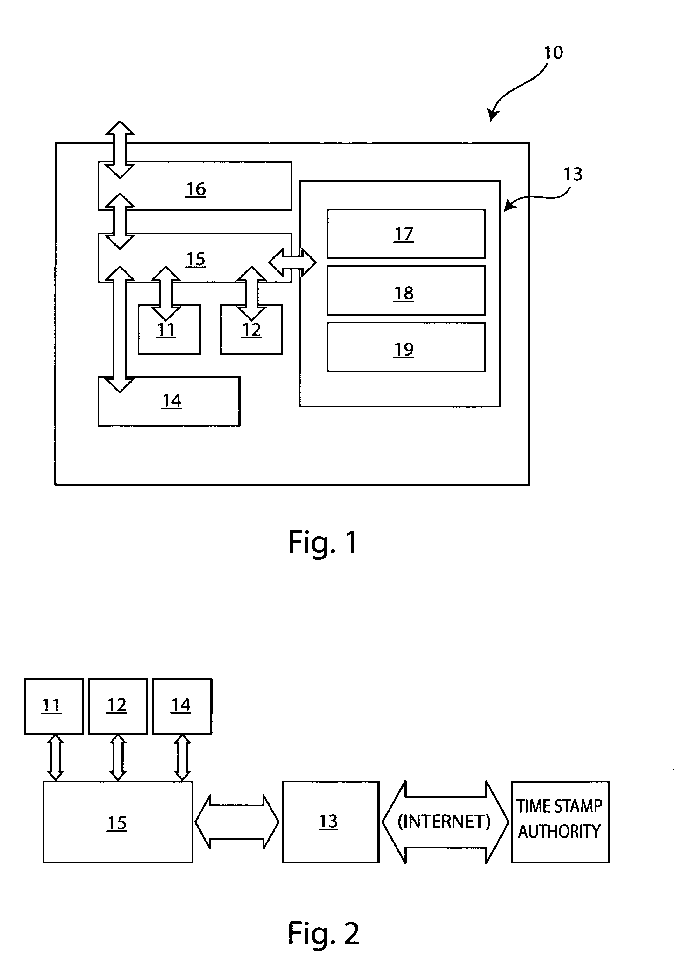

Making reference to figure 1, it is shown that the location- and time-stamping device, particularly for digital documents according to the invention, referred to as a whole with 10, comprises an internal clock 11, a location and local time certification unit, in particular, in the shown embodiment, a generator of pseudorandomic numbers 12, a secure cryptographic machine 13 and a subsystem for the determination of the position 14, connected to a data processor 15, with which a user can interact by means of input/output devices 16.

The whole device, or at least its most sensitive components, is contained inside an anti-tamper box (not shown), so that a possible access to the internal components, for example to obtain the private key or other elements suitable to force the generator of pseudorandomic numbers 12, will imply reactions of protection of the confidential nature of the data of the device.

The subsystem for the determination of the position comprises a standard apparatus for the determination of the position through GPS (or other alternative system of positioning), and is able to determine its position and further the date and current time as received by the GPS (or other positioning system).

The generator of pseudorandomic numbers 12 periodically generates different numbers based on a pseudorandomic sequence based on the time taken by the internal clock 11. The numbers vary at regular intervals, for example every 30 seconds. The generated numerical sequence depends on a seed contained inside the generator of pseudorandomic numbers 12.

Data coming from the generator of pseudorandomic numbers 12, together with data taken by the internal clock 11 and by the subsystem for the determination of the position 14, are processed by the data processor 15 in order to generate a location- and time-certificate con taining the following information, in addition to those commonly present in this kind of certificates, and in particular to those provided for by RFC IETF 3161: date and time of creation of the stamp; name of the issuer of the stamp, i.e. the user, to which the electronic certificate is bound; fingerprint of the document referred to by the stamp; geographical coordinates, at least latitude and longitude and, optionally, also l'altitude; time in GMT format (or other agrred format), coming from the subsystem for the determination of the position 14; number generated by the generator of pseudorandomic numbers 12. Other additional information that can be comprised in the location- and time-certificate are: other data concerning the identity of the user; other information coming from the subsystem for the determination of the position 14, such as data from the satellites that gave a response, time indicated by each satellite; any other possible content requested by a third subject, for example a challenge word; other contents that is desirable to store in the certificate.

The location- and time-stamping device, particularly for digital documents comprises a secure cryptographic machine 13, provided with a private key, stored on a portion 17 of an anti-tamper and anti-probe memory medium, an electronic certificate relating to the electronic key, stored on a portion 18 of an anti-tamper and anti-probe memory medium, issued and signed by the Certification Authority that generated the public and private keys, a cryptographic processor 19 for the cryptographic operation (therefore in a position to encrypt on the base of the public or private key it was provided with), any other possible information (for example data relating to the owner of the location- and time-stamping device, particularly for digital documents).

The data processor 15, after computation of the location- and time-certificate, request the secure cryptographic machine 13 to affix the electronic signature using its own private key, and in case to encrypt the message on the base of a public key provided by the location- and time-stamping device 10, particularly for digital documents as a part of the received user request through the input/output device 16.

Even if the invention is not limited to the use of a specific algorithm of electronic signature, a preferred technique is that known as RSA, already cited.

The location- and time-certificate therefore will be available to third parties for verification.

The location- and time-certificate further can be sent to a specific Time Stamping Authority, that will verify both the correct affixing of the signature and the correspondence of the time indicated on the certificate and the pseudorandomic number generated by the generator 12. In order to allow this verification, obviously the Time Stamping Authority must be informed of the seed used by the generator of pseudorandomic numbers 12 of the location- and time-stamping device 10, particularly for digital documents. Once the verification is done, if all the data are congruent, the Time Stamping Authority can affix a further location- and time-stamp according to technical standards previously mentioned that, in some Countries, are defined by law.

The device and process for location- and time-stamping of the present invention minimising the risk of modification of the certified location and time data, for example by means of data simulation (spoofing) through the generation of false GPS signals (or other positioning system) i.e. by means of attacks to the internal clock of the system.

In fact, as far as the risk of sending false GPS signals is concernes, since the device receives such positioning signals by a plurality of satellites, an attempt of falsification should take the place of all these satellites, a rather complex operation. The embodiments of device of the present invention demanding for a higher security level, it will be necessary that the subsystem for the determination of the position 14 continuously detects the position and in case of a shifting between two subsequent computations which is higher than a preset threshold value immediately signals the anomaly, for example adding an information at this regard in the location- and time-certificate, i.e. by preventing the stamping.

On the other hand, attacks against the clock are avoided by the presence of the location and local time certification unit or by the codification of the time taken by the internal clock 11. The control made possible by the location and local time certification unit, i.e., with reference to the specific embodiment shown herein in an illustrative non-limitative form, by the verification based on the generation of pseudorandomic numbers also make impossible the falsification through the replacement of actual data of position of the moment when the certification is required with data of position computated in a different moment.

An example of implementation of the location- and time-stamping of a document by the device of the present invention is graphically shown with reference to figure 2.

A user askes for the generation of a location- and time-stamp through a request to the location- and time-stamping device 10, particularly for digital documents according to the present invention, this request can comprise a document on which it is possible to affix the stamp and a public key of a subject for which to encrypt the stamp or not.

THe location- and time-stamping device 10, particularly for digital documents can optionally ask to the user for a personal identification number or a keyword before starting up.

The location- and time-stamping device 10, particularly for digital documents obtains the position and current time through the subsystem for determination of the position 14, typically through GPS.

Therefore, data processor 15 computes the document fingerprint, through an algorithm of hashing, such as SHA-1.

The processor 15 generates a location- and time-certificate, comprising the fingerprint generated at the previous step, the number generated by the generator of pseudorandomic numbers 12, the position given by the subsystem for determination of the position 14, the time given by the internal clock 11, the electronic certificate (for example in X.509 format) relating to the private key stored in the location- and time-stamping device 10, particularly for digital documents and further data previously described.

The processor 15 asks the secure cryptographic machine 13 for affixing the electronic signature to the location- and time-certificate and, optionally, for encoding the data on the base of the public key of the subject the data of which where provided by the user.

The location- and time-stamping device 10, particularly for digital documents returns to the user the location- and time-certificate signed and in case encoded. A this point, the location- and time-certificate is complete.

The certificate therefore can be sent to a recipient or can be stored as proof of the effective presence in a specific location in a specific time.

Subsequently, the user can send the location- and time-certificate to a Time Stamping Authority to obtain the affixing of a time stamp issued by the same Time Stamping Authority, but the time stamp will not have as time the moment of submission to the Time Stamping Authority (or at least not only that), but that already present in the location- and time-certificate. In this case, the Time Stamping Authority will verify the congruence of the time of the location- and time-certificate and the number generated by the generator of pseudorandomic numbers 12. The foregoing is possible if the Time Stamping Authority knows the seed used by the generator of pseudorandomic numbers 12.

Any possible shifting between the exact time coming from the satellite and the generator of pseudorandomic numbers 12 will be used to rectify the synchronisation of the generator of pseudorandomic numbers 12 and the time, if these shifting is lower than a preset threshold. This operation, made by the Time Stamping Authority, aims to rectify possible little faults of the internal clock 11.

The present invention was described, for illustrative, non-limitative purposes, according to its preferred embodiments, but it has to be understood that any variation and/or modification can be made by the skilled in the art without escaping from the pertinent scope of protection, as defined by the enclosed claims.

## Claims

1. Location- and time-stamping device (10), in particular for digital documents, **characterised by** comprising an internal clock (11), a location and local time certification unit and a secure cryptographic machine (13), all connected to a data processor (15).

2. Time stamping device (10) according to claim 1, **characterised in that** said location and local time certification unit comprises a subsystem for the determination of the position (14) and alternatively: a generator of pseudorandomic numbers (12) dependent on a seed which is present in the unit, or it contains an encryption symmetrical key of the time coming from said internal clock (11), or it contains an encryption symmetrical key of the time coming from said internal clock (11), for a Time Stamping Authority and signed with the private key of the device.

3. Location- and time-stamping device (10) according to claim 1 or 2, **characterised by** comprising further input/output devices (16).

4. Location- and time-stamping device (10) according to claim 3, **characterised in that** said input/output devices (16) comprise a web connection card or a modem.

5. Location- and time-stamping device (10) according to any of the previous claims, **characterised in that** it is comprised, as a whole or at least as far as its sensitive components is concerned, inside an anti-tamper and anti-probe container.

6. Location- and time-stamping device (10) according to any of the previous claims, **characterised in that** said secure cryptographic machine (13) is provided with a private key, stored on an anti-tamper and anti-probe memory medium (17), of an electronic certificate relating to the electronic key, stored on an anti-tamper and anti-probe memory medium (18), a cryptographic processor (19) for cryptographic operations.

7. Location- and time-stamping device (10) according to any of claims 2-6, **characterised in that** said subsystem for the determination of the position (14) comprises an apparatus for the determination of the position through GPS, Galileo or other positioning system.

8. Process for location- and time-stamping comprising the following steps:
- presenting a request for location- and time-stamping by a user,
- obtaining by a data processor the protected position, date and current time generated by a location and local time certification unit,
- generating, by the data processor, the data of the request for location- and time-certificate, comprising the position, date and time generated by the location and local time certification unit together with the request for time stamp,
- obtaining, by the data processor, the fingerprint of the request for location- and time-stamp, and affixing of the electronic signature on said fingerprint, generated by a cryptographic machine, and in case encoding the request for location- and time-stamp on the base of a public key provided by the user as a part of the received user request,
- storing or sending to third parties of the request for a location-and time- certificate.

9. Process for location- and time-stamping according to claim 7, **characterised in that** it further comprises the following steps:
- sending said request for location- and time- certificate to a Time Stamping Authority,
- verifying, by the Time Stamping Authority, the congruence of the position, date and time generated by said local certification unit, and, in case of positive result,
- generating, by said Time Stamping Authority, a location- and time-stamp, containing the same data previously contained in the location-and time-certificate and the certification time as it is known by the Time Stamping Authority.
